# DEMANDE DE BREVET EUROPEEN

(11) **EP 0 995 532 A1**
(43) Date de publication de la demande: **26.04.2000**
(21) Numéro de dépôt: 99402598.9
(22) Date de dépôt: 20.10.1999
(51) Int. Cl.: B23K 9/16

(54) **Procédé et installation de soudage d'une structure creuse, tel un conteneur ou un tube, avec inertage de son volume interne**

(30) Priorité: 23.10.1998 ZA 9809702
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: Topper, Des c/o L'Air Liquide, Societe Anonyme, 75321 Paris Cedex 07 (FR)
(74) Mandataire: Le Moenner, Gabriel

(57) **Abrégé**

Procédé et installation de soudage à l'arc électrique, en particulier à l'arc plasma, d'une première sous-partie avec une deuxième sous-partie en une structure creuse définissant un volume interne, par exemple un conteneur, lesdites première et deuxième sous-parties étant en métal ou en un alliage métallique, dans lequel :
- on assemble au contact lesdites première et deuxième sous-parties de manière à former une structure creuse non-soudée définissant un volume interne;
- opère un inertage du volume interne de ladite structure creuse par introduction à l'intérieur de ladite structure creuse, d'un mélange gazeux d'inertage et comprenant de 93 % à 99.8 % d'azote et de 0.2 % à 7 % d'oxygène, ledit mélange gazeux d'inertage étant produit par perméation d'air au moyen d'un ou plusieurs modules membranaires; et
- on soude ensemble lesdites première et deuxième sous-parties de manière à former une structure creuse soudée.

Le procédé selon l'invention peut également être appliqué à la fabrication de tubes métalliques.

## Description

La présente invention se rapporte au domaine de la fabrication de structures métalliques de grandes dimensions, en particulier à la fabrication de conteneurs ou de tubes métalliques, dont les sous-parties sont assemblées, les unes aux autres, par soudage à l'arc électrique, notamment par soudage TIG ou par soudage plasma.

Classiquement, une structure creuse de grandes dimensions, c'est-à-dire ayant un diamètre et/ou une longueur pouvant atteindre plusieurs mètres, tel qu'un conteneur, comprend plusieurs sous-parties soudées ensemble, les unes aux autres, à savoir en général une partie principale constituant le corps central du conteneur et deux parties d'extrémité fixées par soudage chacune à une extrémité dudit corps de conteneur.

En d'autres termes, dans le cas d'un conteneur, les deux extrémités du conteneur sont soudées sur le corps du conteneur par mise en oeuvre d'un procédé de soudage, par exemple d'un procédé de soudage plasma automatique, dans lequel la torche de soudage est située à l'extérieur du conteneur et le conteneur étant, quant à lui, mis en rotation autour de son axe, de manière à réaliser un joint de soudure uniforme sur toute la périphérie ou la circonférence dudit conteneur, tout au long du plan de joint défini par la réunion des deux sous-parties à souder l'une avec l'autre.

De manière alternative, il est également possible de maintenir les parties à souder fixes et de déplacer la ou les torches de soudage autour des parties à souder.

Dans le cas de la fabrication de tubes métalliques, les sous-parties d'un tube sont en fait, dans le cadre de la présente invention, les deux bords longitudinaux opposés d'une même feuille ou plaque métallique, lesquels sont rapprochés l'un de l'autre jusqu'au contact (formage en "U" puis en "O"), avant d'être soudés ensemble en un tube "étanche".

En d'autres termes, dans le cadre de l'invention, les sous-parties peuvent être portées par une même pièce (cas d'un tube) ou, au contraire, être portées par deux pièces ou structures séparées qui doivent être assemblées l'une avec l'autre (cas d'un conteneur).

En pratique, il a été observé que, durant l'opération de soudage, la partie du joint de soudure située à l'envers de la soudure, c'est-à-dire à l'intérieur du volume défini par le conteneur ou le tube, est très sensible à l'oxydation lorsque le métal est encore en fusion ou à haute température.

Il est donc nécessaire, durant toute l'opération de soudage, de protéger le joint de soudure durant sa réalisation par mise en oeuvre d'un protection gazeuse non seulement du côté externe, mais aussi du côté interne dudit conteneur ou du tube.

Pour ce faire, l'air situé à l'intérieur du conteneur ou du tube doit être purgé et remplacé par une atmosphère inerte ou neutre, sensiblement exempte d'oxygène.

A cette fin, on utilise habituellement de l'argon ou de l'azote provenant d'une source de production cryogénique permettant de produire des fluides cryogéniques, notamment de l'azote et de l'argon, d'une pureté classiquement supérieure à 99,9%, par exemple une unité de distillation cryogénique.

Après production par distillation cryogénique, l'azote ou l'argon obtenu est conditionné dans des récipients de stockage et transport, telles des bouteilles de gaz, puis est acheminé subséquemment sur le site d'utilisation par un moyen de transport adéquat, tel un camion.

Toutefois, utiliser de l'azote ou de l'argon produit par distillation cryogénique, puis acheminé sur le site d'utilisation, c'est-à-dire le site de soudage, présente un certain nombre d'inconvénients, notamment de nécessiter:
- un suivi strict des stocks et des approvisionnements pour éviter tout manque de produit sur le site d'utilisation,
- un contrôle sévère des coûts de production et de livraison pour minimiser leur impact sur le coût final du produit fini, c'est-à-dire du conteneur ou du tube soudé,
- un site de stockage des bouteilles de gaz non encore utilisées.

Le but de la présente invention est alors de proposer un procédé et un dispositif de fabrication d'une structure de grandes dimensions présentant un volume interne creux, tel un conteneur ou un tube, ne présentant pas les inconvénients précités.

Un autre but de l'invention est de proposer un procédé de soudage des sous-unités d'une telle structure de grandes dimensions mettant en oeuvre un mélange gazeux d'inertage de la partie interne de ladite structure, destiné à protéger la partie du joint de soudure située vers l'intérieur de ladite structure, qui puisse être réalisée directement sur le site de soudage.

La présente invention concerne alors un procédé de soudage à l'arc électrique d'au moins une première sous-partie avec au moins une deuxième sous-partie en une structure creuse définissant un volume interne, lesdites première et deuxième sous-parties étant en métal ou en alliage métallique et étant portées par une même et unique pièce ou structure ou, au contraire, par plusieurs pièces ou structures, dans lequel :
- on assemble sensiblement au contact au moins lesdites première et deuxième sous-parties de manière à former une structure creuse non-soudée définissant un volume interne, la ligne de contact entre lesdites sous-paries définissant au moins un plan de joint;
- opère un inertage au moins partiel d'au moins une partie dudit volume interne de ladite structure creuse par introduction d'un mélange gazeux d'inertage à l'intérieur de ladite structure creuse, ledit mélange gazeux d'inertage comprenant de 93 % à 99.8 % d'azote et de 0.2 % à 7 % d'oxygène; et
- on soude ensemble lesdites première et deuxième sous-parties le long du plan de joint de manière à obtenir une structure creuse soudée, par exemple un conteneur ou un tube.

Selon le cas, le procédé de soudage peut comprendre l'une ou plusieurs des caractéristiques suivantes:
- le mélange gazeux d'inertage comprend de 95 % à 99.7 % d'azote et de 0.3 % à 5 % d'oxygène, de préférence le mélange gazeux d'inertage comprend de 97.5 à 99.6 % d'azote et de 0.4 à 2.5 % d'oxygène, de préférence de l'ordre de 2% d'oxygène et le reste étant essentiellement de l'azote ;
- le mélange gazeux d'inertage peut comprendre, en outre, des impuretés gazeuses choisies parmi l'argon, le dioxyde de carbone, le monoxyde de carbone et la vapeur d'eau, de préférence la teneur totale en lesdites impuretés est inférieure à 0.5% ;
- le mélange gazeux d'inertage est produit à partir d'air séparé par perméation, de préférence le mélange gazeux d'inertage est produit directement sur site et est introduit à l'intérieur du volume interne de ladite structure creuse ;
- la séparation de l'air par perméation est réalisée au moyen d'au moins une membrane ou d'au moins un module membranaire de perméation et le mélange gazeux d'inertage est récupéré côté retentât d'au moins ladite membrane ou dudit module membranaire ;
- préalablement au début de l'inertage du volume interne de la structure creuse, on réalise un colmatage substantiellement hermétique du volume interne de la structure creuse ;
- l'inertage est réalisé au moins avant commencement du soudage par substitution progressive de l'air ambiant contenu dans la structure creuse par le mélange gazeux d'inertage, de préférence l'inertage est maintenu durant toute la durée du soudage ;
- le mélange gazeux d'inertage est introduit à l'intérieur de la structure creuse à une pression comprise entre 1,5.10⁵ Pa et 5.10⁵ Pa, de préférence de l'ordre de 3,5.10⁵ Pa environ ;
- durant toute la durée du soudage des première et deuxième sous-parties, l'une avec l'autre, on maintient une pression à l'intérieur de la structure creuse inférieure à 1.10⁵ Pa, de préférence comprise entre 0,2.10⁵ Pa et 0,5.10⁵ Pa environ ;
- le soudage à l'arc est un soudage plasma ou un soudage TIG ou une combinaison TIG-plasma;
- les première et deuxième sous-parties sont des sous-parties d'un conteneur, de préférence la première sous-partie constitue au moins une partie de l'enveloppe centrale du conteneur et la deuxième sous-partie est un élément d'extrémité de conteneur;
- les première et deuxième sous-parties constituent un tube métallique ; les première et deuxième sous-parties constituant les bords longitudinaux d'une unique plaque ou feuille métallique, lesquels sont rapprochés au contact l'un de l'autre (formage en "U" puis en "O"), puis soudés ensemble de manière à obtenir un tube métallique creux.

En outre, l'invention concerne également une installation de soudage à l'arc électrique d'au moins une première sous-partie avec au moins une deuxième sous-partie en une structure creuse définissant un volume interne, lesdites première et deuxième sous-parties étant en métal ou en un alliage métallique, comprenant :
- des moyens de maintien permettant d'assembler et de maintenir au contact au moins lesdites première et deuxième sous-parties de manière à former une structure creuse non-soudée définissant un volume interne;
- des moyens d'inertage permettant d'opérer un inertage au moins partiel d'au moins une partie dudit volume interne de ladite structure creuse par introduction d'un mélange gazeux d'inertage à l'intérieur de ladite structure creuse, lesdits moyens d'inertage comportant :
   . des moyens de perméation comprenant une ou plusieurs membranes ou modules membranaires de perméation permettant d'obtenir un mélange gazeux d'inertage comprenant de 90 % à 99.8 % d'azote et de 0.2 % à 10 % d'oxygène à partir d'air;
   . et des moyens d'alimentation en gaz d'inertage permettant l'introduction dudit mélange gazeux d'inertage à l'intérieur de ladite structure creuse ; et
   . des moyens de soudage comportant au moins une torche de soudage à l'arc électrique, de préférence de type plasma, TIG ou une combinaison de torches TIG-plasma, permettant de souder ensemble au moins lesdites première et deuxième sous-parties, de manière à former une structure creuse soudée.

De préférence, l'installation comporte, en outre, des moyens rotatifs permettant de conférer un mouvement de rotation à la structure creuse ou à la torche de soudage, durant au moins une partie de la durée du soudage.

Selon un mode préféré de l'invention, la structure creuse est un conteneur, lesdites première sous-partie et deuxième sous-partie constituant, respectivement, au moins une partie de l'enveloppe centrale du conteneur et au moins un élément d'extrémité du conteneur.

Selon un autre aspect, la structure creuse est un tube métallique creux.

Dans le cadre de la présente invention, on entend par "air", de l'air ambiant éventuellement prétraité, par exemple prépurifié, en une ou plusieurs impuretés ou séché, ou de l'air ambiant atmosphérique non traité.

L'air traité ou non est ensuite soumis à une ou plusieurs étapes de perméation de manière à produire le mélange d'inertage selon l'invention directement sur le site de soudage.

Le procédé de l'invention peut également être appliqué pour fabriquer des tubes métalliques à partir d'une feuille ou plaque métallique dont les deux bords longitudinaux sont rapprochés au contact l'un de l'autre, puis soudés ensemble. Dans ce cas, les deux sous-parties à souder sont les bords longitudinaux opposés portés par une même plaque métallique.

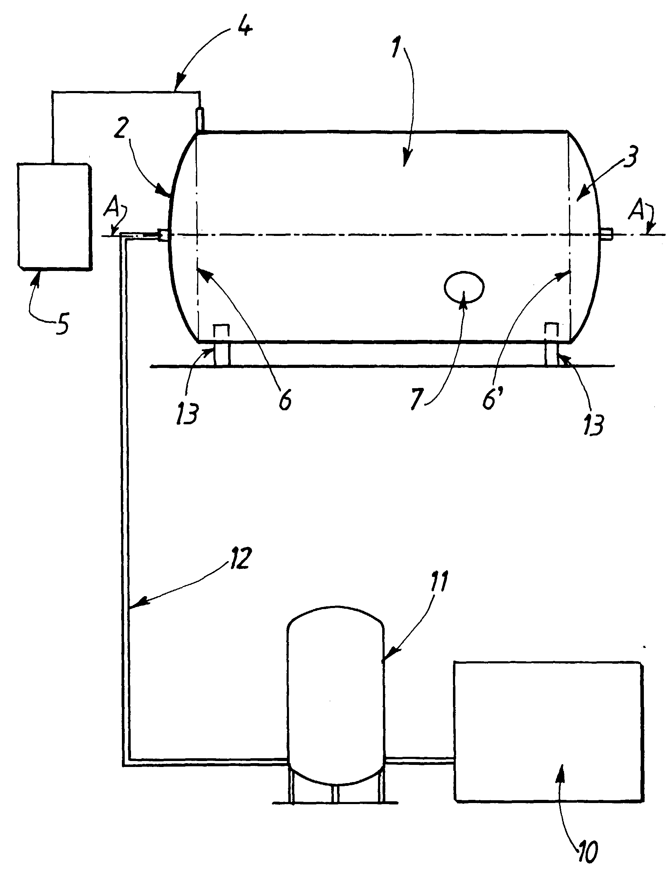

L'invention va maintenant être décrite plus en détail à l'aide d'un mode de réalisation illustré sur la figure annexée, donnée à titre illustratif, mais non limitatif.

La figure annexée représente le schéma d'une installation de soudage conforme à la présente invention.

Plus précisément, on voit une structure de grandes dimensions, à savoir ici un conteneur comportant un corps central 1 de forme cylindrique et de deux parties d'extrémité 2 et 3 fixées au corps central 1 par soudage, par exemple par soudage plasma ou soudage TIG (Tungsten Inert Gas).

Le soudage est réalisé au moyen d'une torche 4 plasma ou TIG automatique commandée par une machine de soudage 5 (non détaillée).

Dans certains cas, il est possible ou souhaitable d'utiliser plusieurs torches 4 d'un même type, par exemple deux ou trois torches TIG, ou de type différents, par exemple une torche TIG en combinaison avec une torche plasma.

Pour réaliser le joint de soudure 6 sur toute la périphérie du conteneur 1, on assemble au contact le corps central 1 et la partie de l'extrémité 2 de manière à former une structure creuse non soudée définissant un volume interne.

On réalise ensuite un pointage pour maintenir la partie centrale 1 du conteneur en contact avec l'extrémité 2.

Ensuite, on inerte la partie interne de la structure creuse en y injectant un mélange gazeux d'inertage de manière à chasser l'air atmosphérique qui s'y trouve et donc la majeure partie de l'oxygène susceptible de venir contaminer le joint de soudure ainsi réalisé.

Pendant que l'une des extrémités du conteneur est soudée à une partie d'extrémité 2 ou 3, l'autre partie du conteneur non encore soudée est fermée par le biais du pointage et/ou, si besoin est, à l'aide de moyens de colmatage étanche pour empêcher l'air atmosphérique d'y entrer et donc le gaz d'inertage d'en sortir.

L'évacuation de l'air atmosphérique contenu à l'intérieur du conteneur peut être effectuée par le biais d'un évent ou d'une ouverture de purge 7, par laquelle le mélange air/gaz de purge est évacué et rejeté à l'atmosphère ou, le cas échéant, récupéré pour être recyclé.

Le mélange gazeux d'inertage ou gaz de purge comprend, de préférence, de 90 % à 99,8% d'azote et au maximum 7% d'oxygène, en général de l'ordre de maximum environ 2% d'oxygène.

Selon l'invention, le mélange gazeux d'inertage est fabriqué directement sur le site d'utilisation à partir d'air ambiant préalablement séparé par perméation au moyen d'une unité de séparation par perméation 10, telle une unité de séparation membranaire commercialisée par la société L'AIR LIQUIDE sous la dénomination FLOXAL™.

En sortie de cette unité de séparation d'air par perméation, on récupère un mélange gazeux d'inertage qui peut être soit directement acheminé par une canalisation jusqu'à l'intérieur du conteneur 1 ou, le cas échéant, stocké dans une capacité tampon 11 en vue d'une utilisation ultérieure, voire, si nécessaire, subir une purification subséquent complémentaire.

Durant l'opération de soudage, le conteneur est animé d'un mouvement de rotation autour de son axe (AA) de manière à pouvoir réaliser un joint de soudure 6 sur toute sa périphérie.

Le mouvement de rotation est obtenu grâce à un système de rotation 13, par exemple...

Après soudage de la première partie d'extrémité 2 sur la première extrémité du corps 1 du conteneur, on procède de la même manière pour souder la deuxième partie d'extrémité 3 sur l'autre extrémité du corps 1 du conteneur.

En variante, au lieu de souder les parties d'extrémité 2 et 3 l'une après l'autre, ainsi que détaillé ci-devant, il est également possible de souder en même temps les deux parties d'extrémité 2 et 3 sur le corps 1 central du conteneur. Dans ce cas, on utilisera au moins deux torches de soudage pour réaliser simultanément les deux joints de soudure 6 et 6', lesdites torches fonctionnant alors en parallèle.

Le mélange gazeux d'inertage produit par l'unité 10 de séparation d'air est introduit dans le conteneur à une pression donnée de l'ordre, par exemple, de 3.5.10⁵ Pa pendant une durée déterminée, par exemple pendant environ 12 minutes.

Après l'opération initiale de purge, la pression à l'intérieur du conteneur est maintenue à une valeur comprise entre 2.10⁴ Pa et 5.10⁴ Pa à l'intérieur du conteneur, par exemple par addition d'un appoint d'azote issu, par exemple de la capacité tampon 11, et est maintenue durant sensiblement toute l'opération de soudage, ce qui permet de conserver une concentration en oxygène à l'intérieur du volume interne du conteneur 1 de l'ordre de 2% environ, voire moins de 2%.

Des joints de soudure réalisés sur des conteneurs fabriqués selon le procédé de l'invention présentent des propriétés tout à fait acceptables du point de vue de l'effort à la traction, de la résistance à la corrosion, de la teneur en azote dans le métal déposé, de la recoloration, de l'oxydation, de la porosité et de la pénétration, ainsi que démontré par des analyses effectuées sur des joints soudés réalisés par mise ne oeuvre du procédé selon l'invention.

Le procédé selon l'invention peut être appliqué au soudage de conteneurs de tous types, tels des réservoirs, des cuves, des silos de stockage ou analogues ou, de manière, similaire, à la fabrication de tubes à partir de feuilles ou plaques métalliques dont les bords longitudinaux sont soudés ensemble.

Il est à noter que, le procédé selon l'invention est particulièrement adapté au soudage de l'inox austénitique.

## Revendications

1. Procédé de soudage à l'arc électrique, en particulier à l'arc plasma, d'au moins une première sous-partie avec au moins une deuxième sous-partie en une structure creuse définissant un volume interne, lesdites première et deuxième sous-parties étant en métal ou en alliage métallique, dans lequel :
- on assemble au contact au moins lesdites première et deuxième sous-parties de manière à former une structure creuse non-soudée définissant un volume interne;
- opère un inertage au moins partiel d'au moins une partie dudit volume interne de ladite structure creuse par introduction d'un mélange gazeux d'inertage à l'intérieur de ladite structure creuse, ledit mélange gazeux d'inertage comprenant de 93 % à 99.8 % d'azote et de 0.2 % à 7 % d'oxygène; et
- on soude ensemble lesdites première et deuxième sous-parties de manière à former une structure creuse soudée.

2. Procédé selon la revendication 1, caractérisé en ce que le mélange gazeux d'inertage comprend de 95 % à 99.7 % d'azote et de 0.3 % à 5 % d'oxygène, de préférence le mélange gazeux d'inertage comprend de 97.5 % à 99.6 % d'azote et de 0.4 % à 2.5 % d'oxygène, de préférence de l'ordre de 2% d'oxygène et le reste étant essentiellement de l'azote.

3. Procédé selon l'une des revendications 1 ou 2, caractérisé en ce que le mélange gazeux d'inertage comprend, en outre, des impuretés gazeuses choisies parmi l'argon, le dioxyde de carbone, le monoxyde de carbone et la vapeur d'eau, de préférence la teneur totale en lesdites impuretés est inférieure à 0.5%.

4. Procédé selon l'une des revendications 1 à 3, caractérisé en ce que le mélange gazeux d'inertage est produit à partir d'air séparé par perméation, de préférence le mélange gazeux d'inertage est produit sur site et est introduit à l'intérieur du volume interne de ladite structure creuse.

5. Procédé selon l'une des revendications 1 à 4, caractérisé en ce que la séparation de l'air par perméation est réalisée au moyen d'au moins une membrane de perméation ou d'au moins un module membranaire de perméation.

6. Procédé selon l'une des revendications 1 à 5, caractérisé en ce que, préalablement au début de l'inertage du volume interne de la structure creuse, on réalise un colmatage substantiellement hermétique du volume interne de la structure creuse.

7. Procédé selon l'une des revendications 1 à 6, caractérisé en ce que l'inertage est réalisé au moins avant commencement du soudage par substitution progressive de l'air ambiant contenu dans la structure creuse par le mélange gazeux d'inertage, de préférence l'inertage est maintenu durant toute la durée du soudage.

8. Procédé selon l'une des revendications 1 à 7, caractérisé en ce que le mélange gazeux d'inertage est introduit à l'intérieur de la structure creuse à une pression comprise entre 1.5.10⁵ Pa et 5.10⁵ Par de préférence de l'ordre de 3.5.10⁵ Pa environ.

9. Procédé selon l'une des revendications 1 à 8, caractérisé en ce que, durant toute la durée du soudage des première et deuxième sous-parties, l'une avec l'autre, on maintient une pression à l'intérieur de la structure creuse inférieure à 10⁵ Pa, de préférence comprise entre 2.10⁴ Pa et 5.10⁴ Pa environ.

10. Procédé selon l'une des revendications 1 à 9, caractérisé en ce que le soudage à l'arc est un soudage plasma, un soudage TIG ou une combinaison TIG-plasma.

11. Procédé selon l'une des revendications 1 à 10, caractérisé en ce que les première et deuxième sous-parties sont des sous-parties d'un conteneur, de préférence la première sous-partie constitue au moins une partie de l'enveloppe centrale du conteneur et la deuxième sous-partie est un élément d'extrémité de conteneur.

12. Procédé selon l'une des revendications 1 à 10, caractérisé en ce que les première et deuxième sous-parties sont constituées par les bords longitudinaux d'une feuille ou plaque métallique, lesdits bords longitudinaux étant assemblés au contact puis soudés ensemble de manière à former un tube métallique définissant un volume interne creux.

13. Installation de soudage à l'arc électrique d'au moins une première sous-partie avec au moins une deuxième sous-partie en une structure creuse définissant un volume interne, lesdites première et deuxième sous-parties étant en métal ou en un alliage métallique, comprenant :
- des moyens de maintien permettant d'assembler et de maintenir au contact au moins lesdites première et deuxième sous-parties de manière à former une structure creuse non-soudée définissant un volume interne;
- des moyens d'inertage permettant d'opérer un inertage au moins partiel d'au moins une partie dudit volume interne de ladite structure creuse par introduction d'un mélange gazeux d'inertage à l'intérieur de ladite structure creuse, lesdits moyens d'inertage comportant :
. des moyens de perméation comprenant une ou plusieurs membranes de perméation permettant d'obtenir un mélange gazeux d'inertage comprenant de 90 à 99.8 % d'azote et de 0.2 à 10 % d'oxygène à partir d'air;
. et des moyens d'alimentation en gaz d'inertage permettant l'introduction dudit mélange gazeux d'inertage à l'intérieur de ladite structure creuse ; et
- des moyens de soudage comportant au moins une torche de soudage à l'arc électrique, de préférence de type plasma et/ou TIG, permettant de souder ensemble au moins lesdites première et deuxième sous-parties, de manière à former une structure creuse soudée.

14. Installation selon la revendication 13, caractérisée en ce qu'elle comporte, en outre, des moyens rotatifs permettant de conférer un mouvement de rotation à la structure creuse et/ou au moins une torche durant au moins une partie de la durée du soudage.

15. Installation selon la revendication 14, caractérisée en ce que la structure creuse est un conteneur, lesdites première sous-partie et deuxième sous-partie constituant, respectivement, au moins une partie de l'enveloppe centrale du conteneur et au moins un élément d'extrémité du conteneur.
